# FASCICULE DE BREVET EUROPEEN

(11) **EP 3 813 505 B1**
(45) Date de publication et mention de la délivrance du brevet: **13.08.2025**
(21) Numéro de dépôt: 19729011.7
(22) Date de dépôt: 11.06.2019
(51) Int. Cl.: A01C 7/10, A01C 7/20, A01C 7/04

(54) **ENSEMBLE DE DISTRIBUTION DE PRODUITS GRANULAIRES**
ANORDNUNG ZUR AUSGABE VON GRANULATFÖRMIGEN PRODUKTEN
ASSEMBLY FOR DISPENSING GRANULAR PRODUCTS

(30) Priorité: 27.06.2018 EP 18305820
(43) Date de publication de la demande: 05.05.2021
(73) Titulaire: Ribouleau Monosem, 79240 Largeasse (FR)
(72) Inventeur: GODART, Luc, 49360 Toutlemonde (FR); BEAUNEVEU, Patrick, 79350 Chiche (FR); BERTHONNEAU, Bruno, 79300 St Sauveur (FR)
(74) Mandataire: Holst, Sönke
(86) Numéro de dépôt international: PCT/EP2019/065103
(87) Numéro de publication internationale: WO 2020/001964

(56) Documents cités:
- EP-A1- 2 213 152
- WO-A2-2018/093568
- CN-A- 104 956 815
- FR-A1- 2 414 288
- US-A1- 2003 159 631
- US-A1- 2016 143 213

## Description

### Objet de l'invention

La présente invention concerne un ensemble de distribution d'un produit granulaire à l'unité, de préférence une graine, un élément semeur et un semoir comprenant un tel ensemble de distribution.

### Etat de la technique

Les semoirs de distribution de produits granulaires, tels que des produits phytosanitaires, de l'engrais ou des semences, comprennent classiquement un châssis, porté ou traîné par un engin agricole, tel qu'un tracteur, et des éléments semeurs disposés à intervalle régulier pour la dépose des produits granulaires au sol.

Parmi les semoirs à graines, sont connus ceux dits « mono-graines », ou semoirs de précision, car ils comprennent un ensemble de distribution et de mise en terre rang par rang, permettant de placer avec précision des graines dans un sillon. Un tel semoir permet d'ouvrir un sillon d'une profondeur contrôlée, d'y déposer les graines une à une, espacées au fond du sillon, puis de refermer le sillon pour garantir un contact de la totalité des graines avec le sol.

La majorité des ensembles de distribution mécaniques utilisent un principe pneumatique, les graines étant chargées, à l'unité, par aspiration ou dépression, dans des alvéoles disposées en périphérie d'une face d'un disque de distribution, qui est en rotation, les graines étant ensuite relâchées par soufflage ou arrêt de la dépression.

Pour les ensembles de distribution à dépression, le disque de distribution est disposé sensiblement verticale et sépare un compartiment servant de réservoir de graines d'un compartiment dépourvu de graines et soumis à une dépression. La dépression appliquée sur un côté du disque de distribution permet de capturer, depuis le réservoir, les graines dans chacune des alvéoles du disque, et ainsi de les isoler. Les graines individualisées, ainsi capturées, sont ensuite déchargées, une à une, par la rotation du disque de distribution, amenant les alvéoles comprenant le graine individualisée, vers une zone dépourvue de dépression. Les graines sont alors relâchées du disque de distribution et tombent dans le sillon.

La disposition des alvéoles sur le disque de distribution, en particulier la distance séparant chaque alvéoles et la vitesse de rotation du disque déterminent la distance finale entre chaque graine dans le sillon, et ceci quelle que soit la vitesse de travail du semoir.

Généralement, les alvéoles des disques de distribution ont une forme sensiblement circulaire, et des dimensions identiques entre elles au sein d'un même disque, les rendant aptes à recevoir des graines de toutes formes et de toutes dimensions. Toutefois, cette polyvalence présente un inconvénient majeur. En effet, les graines d'un type donné, comme d'ailleurs l'ensemble des produits granulaires, n'ont généralement pas toutes la même forme, ni les mêmes dimensions ; par conséquent, elles n'occupent pas la même place dans les alvéoles du disque de distribution, ce qui introduit un décalage plus ou moins important entre les graines et introduit ainsi une variabilité des distances inter-graines au sol.

Dans certains semoirs, l'ensemble de distribution comprend en outre, ou coopère avec, des moyens de convoyage des produits granulaires au sol, qui peuvent prendre la forme d'une roue à aubes comme décrit dans le document FR2414288, ou plus habituellement comprennent ou ont la forme d'une goulotte de guidage, permettant de diriger les graines pendant leur chute et d'éviter qu'elles ne tombent en dehors du sillon.

Le rôle de canalisation d'une telle goulotte est d'autant plus important que l'ensemble de distribution se trouve à une hauteur importante par rapport au sol. En effet, habituellement la goulotte adopte un profil permettant le glissement des graines, et possède une forme permettant de leur donner une trajectoire propice à leur placement dans le sillon. De plus, la forme de la goulotte permet d'utiliser la hauteur de chute de la graine pour lui donner, en sortie de goulotte, une composante de vitesse horizontale, qui est au moins égale à la vitesse d'avancement du semoir, mais de sens opposé. La valeur de cette vitesse a une importance non négligeable sur le phénomène de rétro-roulage de la graines dans le fond du sillon et donc sur la perte de précision au placement des graines. La hauteur de chute étant constante pour un élément semeur donné, dans un ensemble s'appuyant uniquement sur la gravité, la vitesse horizontale pourra atteindre une valeur optimale maximale et ne sera jamais supérieure à cette valeur. Ceci confère au semoir une vitesse maximale optimale au-delà de laquelle il y aura perte de précision par rétro-roulage.

De plus, l'emploi d'une goulotte est bien souvent préjudiciable à la précision de placement des graines. En effet, les chocs répétés des graines contre les parois de la goulotte durant leur chute et les vibrations dues au fonctionnement du semoir, ou bien provoqués par les irrégularités du sol, perturbent le dépôt des graines au sol, ce qui fait fortement varier la distance entre les grains.

Ainsi, pour des ensembles de distribution comprenant à la fois des disques de distribution et des goulottes de guidage, l'effet de décalage des graines au niveau du disque et le phénomène de rétro-roulage s'additionnent pour augmenter sensiblement la perte de précision dans le placement des graines au sol et rendre l'intervalle entre les graines variable.

Les moyens de convoyage peuvent également comprendre, en lieu et place d'une goulotte, une paire de courroies rotatives espacées l'une de l'autre, entre lesquelles sont reçues les graines du disque de distribution, et dont le déplacement entraine les graines au sol, comme cela est décrit dans le document US2016/0143213, ou bien une courroie-brosse recevant à l'extrémité des poils de la brosse chaque graine, comme décrit dans les documents EP2213152 et US2010192819, ou encore une bande à palettes coopérant avec une partie inclinée faisant partie des moyens de convoyage, comme décrit dans les documents WO2013/049198 et US2014230705.

Toutefois, dans de tels ensemble de distribution, la précision de dépose des graines au sol est assurée à la fois par le disque de distribution, qui donne la cadence d'approvisionnement des graines, et par les moyens de convoyage, dont la vitesse de défilement doit être en accord avec la vitesse d'avancement de la machine de façon à éviter tout rétro-roulage des graines en sortie de convoyeur. Ces ensembles présentent donc une grande variabilité de distances inter-graines au sol, car l'effet de décalage des graines au niveau du disque de distribution est amplifié par ces moyens de convoyage.

De plus, ces ensembles de distribution présentent l'inconvéniente de ne pas être adapté pour des produits granulaires de petites dimensions, en plus d'être sensible à une forte usure du fait d'un transfert par pincement.

Certains ensembles de distribution comprennent en outre des moyens de transfert entre le disque de distribution et les moyens de convoyage au sol des graines.

Les documents WO2013/049198, US2014230705, CN 104 956 815 A et WO 2018/093568 décrivent, également le transfert des graines individualisées d'un disque de distribution à dépression vers des moyens de convoyage comprenant une bande à palettes, par l'emploi d'une roue ou deux roues disposées tangentiellement et tournant en sens opposé l'une par rapport à l'autre, pour récupérer la graine du disque de distribution et la transférer aux moyens de convoyage.

Là encore, ce type d'ensemble de distribution présente l'inconvénient de ne pas être très précis dans le positionnement des graines au sol, car ces dernières sont attrapées quelque soit leur position sur le disque de distribution et transférées aux moyens de convoyage quelque soit la position des palettes. Les graines peuvent alors se coincer dans le carter de l'ensemble de distribution et/ou dans le carter des moyens de convoyage.

Ainsi donc, et en particulier pour des ensembles de distribution de produits granulaires individualisés, et encore plus particulièrement pour des ensembles de distribution à disque de distribution, il existe un besoin grandissant d'une solution de distribution qui soit suffisamment précise pour des vitesses de travail de plus en plus importantes et permettant une distribution constante compte tenu des différences de vitesses entre l'ensemble de distribution et la vitesse de travail du semoir.

### Buts de l'invention

La présente invention vise à fournir un élément de distribution de produits granulaires, un semoir comprenant un tel élément de distribution qui ne présentent pas les inconvénients de l'état de la technique.

La présente invention vise à fournir une alternative aux solutions de l'état de la technique existantes.

L'invention propose une solution permettant le contrôle de la trajectoire et du parcours du produit granulaire, en particulier d'une graine, depuis le réservoir de produits jusqu'à son dépôt au sol, et dans le cas des graines jusque dans le sillon.

L'invention propose une solution permettant de maintenir plus constant l'intervalle séparant chaque produit granulaire au sol, en particulier chaque graine.

### Résumé de l'invention

La présente invention porte sur un ensemble de distribution de produits granulaires au sol comprenant des moyens de distribution des produits granulaires sous une forme individualisée, des moyens de convoyage au sol des produits granulaires individualisés et des moyens de transfert des produits granulaires individualisés des moyens de distribution aux moyens de convoyage, les moyens de transfert étant synchronisés en vitesse et en position avec les moyens de distribution, et les moyens de transfert capturant de façon individualisée les produits granulaires et les immobilisant au sein des moyens de transfert de façon à maintenir chaque produit granulaire espacé d'une distance déterminée et constante les uns par rapport aux autres, dans les moyens de transfert et durant le transfert des produits granulaires aux moyens de convoyage. Les moyens de transfert comprennent, une ou plusieurs roues alvéolaires, mobiles en rotation chacune autour d'un axe et comprenant des alvéoles aptes à recevoir un produit granulaire à la fois. La ou les roues alvéolaires comprennent des parois, mobiles entre une position radiale et une position circonférentielle, selon un axe d'articulation situé en périphérie de la ou des roues et parallèle à l'axe de la ou des roues, ou la ou les roues alvéolaires comprennent des parois radiales fixes et des cloisons mobiles comprenant une extrémité proximale, proche de leur axe d'articulation et une extrémité distale, opposée à l'extrémité proximale, l'axe d'articulation étant parallèle à l'axe de la ou des roues alvéolaires et étant disposé en périphérie de la ou des roues alvéolaires, les cloisons mobiles passant d'une position dite « fermée », dans laquelle l'extrémité distale se trouve dans le prolongement de l'extrémité proximale d'une alvéole adjacente, à une position dite « ouverte », dans laquelle l'extrémité distale s'étend radialement vers l'axe de rotation de la ou des roues alvéolaires,

Selon des modes particuliers de l'invention, l'ensemble de distribution selon l'invention comprend au moins une, ou une combinaison quelconque appropriée, des caractéristiques suivantes :
- les moyens de convoyage maintiennent constante, jusqu'au sol, la distance entre chaque produit granulaire individualisé, qui a été fixée par les moyens de transfert,
- les moyens de transfert sont synchronisés en position avec les moyens de convoyage,
- la distance entre chaque produit granulaire individualisé dans les moyens de transfert, est ajustable,
- les cloisons mobiles passent de la position « fermée » à la position « ouverte » par l'action d'une came contre la force d'un ressort, et de la position « ouverte » à la position « fermée » par le relâchement du ressort,
- les moyens de distribution du produit granulaire sous forme individualisé comprennent un ou plusieurs disques distributeurs, mobiles en rotation, et comprenant deux faces, dont au moins une première face comprend, disposées sur sa périphérie, des alvéoles aptes à recevoir les produits granulaires de façon individualisée,
- les moyens de convoyage sont ou comprennent un convoyeur à palettes.

La présente invention porte aussi sur un élément semeur comprenant un ou plusieurs ensembles de distribution de produits granulaires au sol selon l'invention.

La présente invention porte de plus sur un semoir comprenant un ou plusieurs éléments semeurs selon l'invention.

### Brève description des figures

La figure 1 est une représentation schématique d'une vue de coté d'un élément semeur comprenant un ensemble de distribution selon l'invention.
La figure 2 est une représentation schématique d'un mode de réalisation particulier de l'ensemble de distribution selon l'invention.
La figure 3 est une représentation schématique du transfert des produits granulaires dans l'ensemble de distribution selon l'invention jusqu'au sol.
La figure 4 est une représentation schématique d'un premier mode de réalisation des moyens de transfert des produits granulaires individualisés entre les moyens de distribution et les moyens de convoyage des produits granulaires individualisés au sol.
La figure 5 est une représentation schématique d'un second mode de réalisation des moyens de transfert des produits granulaires individualisés entre les moyens de distribution et les moyens de convoyage des produits granulaires individualisés au sol.
La figure 6 est une représentation schématique d'un troisième mode de réalisation des moyens de transfert des produits granulaires individualisés entre les moyens de distribution et les moyens de convoyage des produits granulaires individualisés au sol.
La figure 7 est une représentation schématique d'une vue en perspective de détail des moyens de transfert représentés à la figure 6.
La figure 8 est une représentation schématique d'une vue en perspective de détail de l'autre côté des moyens de transfert représenté à la figure 7.
La figure 9 est une représentation schématique d'une vue de coté de moyens de maintien de l'individualisation des produits granulaires durant leur réception depuis les moyens de distribution.
La figure 10 est une représentation schématique d'une vue de coté de l'extrémité inférieure d'un premier mode de réalisation des moyens de convoyage des produits granulaires individualisés au sol.
La figure 11 est une représentation schématique d'une vue de coté de l'extrémité inférieure d'un second mode de réalisation des moyens de convoyage des produits granulaires individualisés au sol.
La figure 12 est une autre représentation schématique d'une vue de coté de l'extrémité inférieure du mode de réalisation selon la figure 11.
La figure 13 est une représentation schématique d'une vue de coté de l'extrémité inférieure d'un troisième mode de réalisation des moyens de convoyage des produits granulaires individualisés au sol.
La figure 14 est une représentation schématique d'une vue de coté de l'extrémité inférieure d'un quatrième mode de réalisation des moyens de convoyage des produits granulaires individualisés au sol.
La figure 15 est une représentation schématique d'une vue de coté de l'extrémité inférieure d'un cinquième mode de réalisation des moyens de convoyage des produits granulaires individualisés au sol.
La figure 16 est une représentation schématique d'une vue de coté des composantes de vitesse auxquelles sont soumis les produits granulaires à leur sortie des moyens de convoyage.
La figure 17 est une représentation schématique d'une vue de coté d'un autre mode de réalisation de l'ensemble de distribution selon l'invention.
La figure 18 est une représentation schématique d'une vue de coté d'un autre mode de réalisation de l'ensemble de distribution selon l'invention.
La figure 19 est une représentation schématique d'une vue de détail du mode de réalisation représenté à la figure 18.

### Description détaillée de l'invention

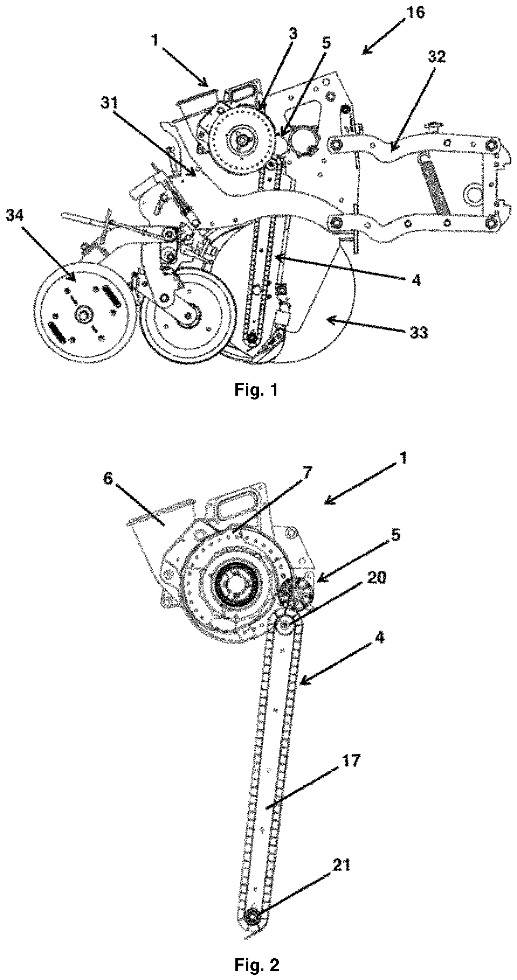

Dans la suite de la description et des revendications, les termes « haut », « bas », « au-dessus », « en dessous », « supérieur », « inférieur », « vertical » et « horizontal » font référence à la position normale de l'ensemble de distribution 1 selon l'invention, et des éléments qui le ou les composent lors de leur utilisation normale, et, en particulier, font référence à sa ou leur position telle que représentée aux figures 1 à 19.

L'ensemble de distribution 1 selon l'invention est apte à distribuer au sol toutes sortes de produits granulaires. Toutefois, à titre d'exemple, non limitatif, un tel ensemble 1 va être décrit pour la distribution au sol de semences, en particulier de graines 2.

L'ensemble de distribution 1 comprend des moyens de distribution 3 de graines 2 individualisées, des moyens de convoyage 4 des graines individualisées jusqu'au sol et des moyens de transfert 5, de façon individualisée, des graines individualisées depuis les moyens de distribution 3 vers les moyens de convoyage 4 (figure 2).

L'ensemble de distribution 1 peut comprendre en outre, ou coopérer, avec des moyens de stockage des graines 2 comprenant par exemple un réservoir 6 d'alimentation, ou une trémie d'alimentation, rempli(e) de graines 2 lors de l'utilisation de l'ensemble de distribution 1 et/ou des moyens d'aspiration et/ou de soufflage des graines 2 coopérant avec les moyens de distribution 3 de graines 2 individualisées.

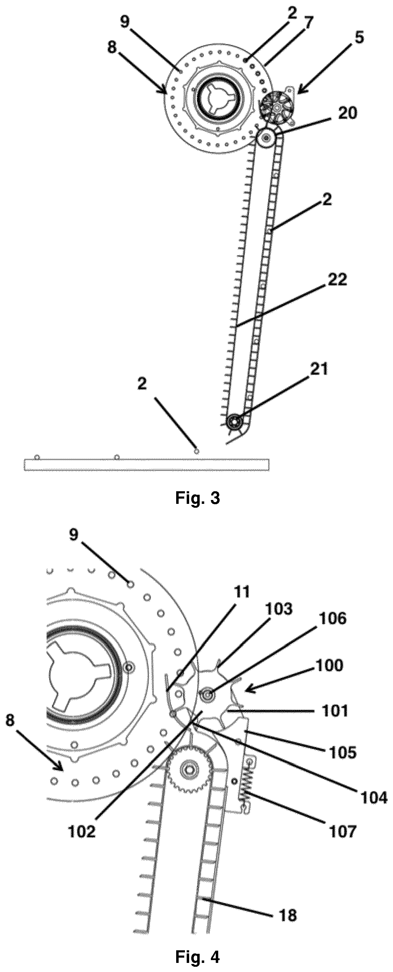

Les moyens de distribution 3 des graines 2 individualisées sont tous moyens aptes à prendre, de façon individualisée, c'est-à-dire à l'unité, des graines 2 depuis un réservoir 6 pour un dépôt individualisé au sol (figures 3 à 5).

De préférence, ces moyens de distribution 3 comprennent un ou plusieurs disques distributeurs 7 de graines 2, de préférence sensiblement plats, et comprenant deux faces, dont au moins une première face 8 comprend, disposées sur sa périphérie, des alvéoles 9 aptes à recevoir une graine 2 à la fois.

Les alvéoles 9 peuvent avoir une section sensiblement circulaire, ovoïde ou elliptique, et ont des dimensions, de préférence identiques sur toute la périphérie du disque distributeur 7. Les alvéoles 9 comprennent avantageusement dans leur fond un trou débouchant sur la seconde face, afin de permettre l'application, dans chaque alvéole 9, d'un vide ou d'une pression d'un gaz, par exemple de l'air.

Le ou les disques distributeurs 7 sont de préférence disposés sensiblement verticalement, adjacent à un ou plusieurs réservoirs d'alimentation 6, la première face 8, comprenant les alvéoles 9, étant ainsi en contact avec des graines 2 disposées dans au moins un réservoir d'alimentation 6. Le ou les disques distributeurs 7, mobiles en rotation grâce à des moyens d'entrainement, capturent une graine 2 dans chaque alvéole 9, par une aspiration ou une dépression créée sur la seconde face du disque distributeur 7. Les graines 2, ainsi individualisées et capturées dans chaque alvéole 9, sont ensuite déchargées, une par une, par l'arrêt de l'aspiration ou de la dépression, pour une prise en charge par des moyens de transfert 5 au niveau de la zone d'arrêt de l'aspiration ou de la dépression, ou au niveau d'une zone se situant juste avant.

Les moyens de transfert 5 des graines 2 des moyens de distribution 3 aux moyens de convoyage 4 capturent de façon individualisée les produits granulaires et les immobilisent au sein des moyens de transfert 5, de manière à ce que chaque produit granulaire soit espacé les uns des autres d'une distance déterminée, sensiblement identique entre chaque produit granulaire, et constante, dans les moyens de transfert 5 et durant leur transfert aux moyens de convoyage 4. Cela permet aux moyens de transfert 5 de fixer la distance entre chaque produit granulaire (une distance dite de « calage »), à une valeur déterminée, qui est constante durant la mise en œuvre des moyens de transfert 5 et entre chaque produit granulaire successif. Ces moyens de transfert 5 conditionnent ainsi la distance au sol séparant chaque produit granulaire, contrairement aux solutions de l'état de la technique dans lesquelles ce sont les moyens de distribution, par la distance séparant chaque alvéoles et la vitesse de rotation du disque de distribution, qui déterminent cette distance au sol.

Ces moyens de transfert présentent l'avantage de supprimer les décalages produits par le chargement et le déchargement des graines 2, dans et depuis les moyens de distribution 3, en particulier s'ils comprennent un disque de distribution 7, mais également les décalages introduits pas des moyens de transfert classiques des graines 2 vers les moyens de convoyage 4.

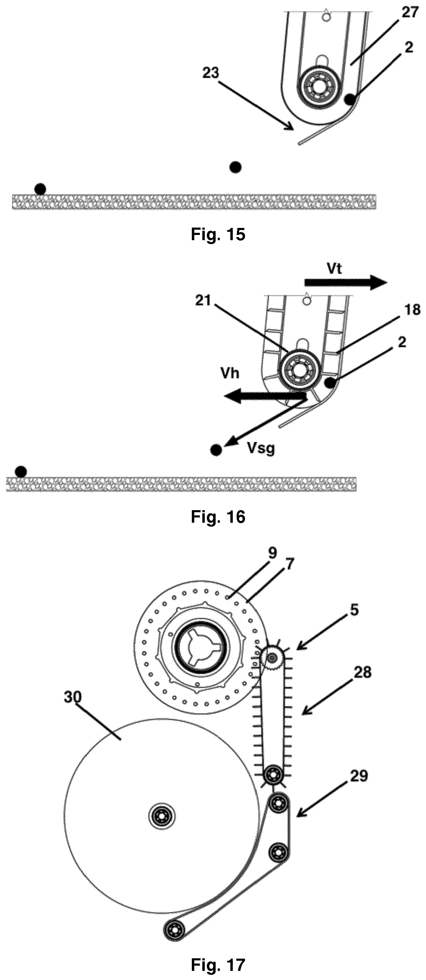

De préférence, les moyens de transfert 5 selon l'invention sont synchronisés en vitesse et en position avec les moyens de convoyage 4, ce qui présente l'avantage de limiter, ou supprimer, les décalages de distance produits par le transfert des graines 2 vers les moyens de convoyage 4. Ainsi, la distance finale au sol entre les graines 2 est donnée par la fréquence de transfert des graines 2 depuis les moyens de transfert 5 vers les moyens de convoyage 4. De plus, cela permet à ce que la vitesse relative des graines 2 par rapport au sol soit la plus faible possible, de préférence qu'elle soit nulle, tout en respectant la distance inter-graines (figure 16).

De préférence, la distance entre chaque graine 2, dans les moyens de transfert 5, est ajustable, donc réglable, avantageusement en fonction du type de moyens de distribution 3 et de la distance entre les graines 2 individualisées dans ces moyens de distribution 3.

De préférence, les moyens de transfert 5 comprennent au moins une roue alvéolaire 100, 200, 300, mobile en rotation, comprenant des alvéoles 101, 201, 301 qui sont aptes à recevoir une graine 2 à la fois et qui sont disposées en rapport avec les moyens de distribution 3 (figures 2 à 9).

Par exemple, dans un ensemble de distribution 1 comprenant un disque de distribution 7, la roue alvéolaire 100, 200, 300 est synchronisée en vitesse et en position avec le disque de distribution 7, afin que chaque alvéole 101, 201, 301 corresponde à, et se trouve en rapport avec, une alvéole 9 du disque de distribution 7.

De préférence, la roue alvéolaire 100, 200, 300 est disposée contre, ou à proximité, de la face 8 du disque de distribution 7 qui comprend les alvéoles 9, l'axe 106, 206, 306 de rotation de la roue 100, 200, 300 étant sensiblement parallèle à celui du disque de distribution 7 et la roue 100, 200, 300 tournant dans le sens opposé du sens de rotation du disque de distribution 7 (figure 4).

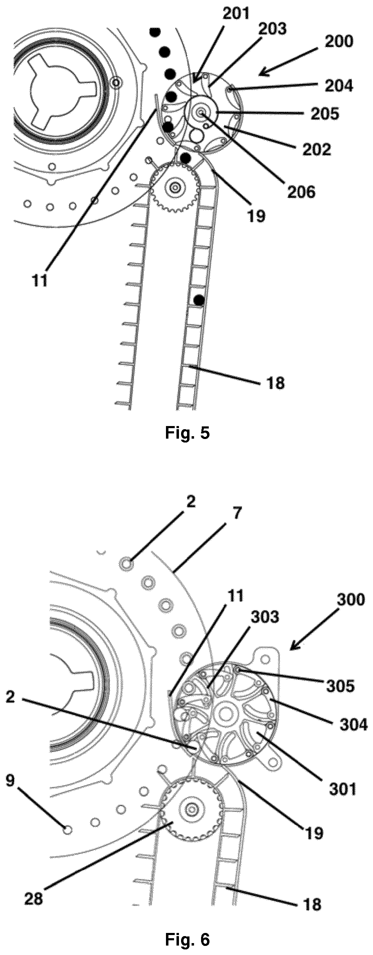

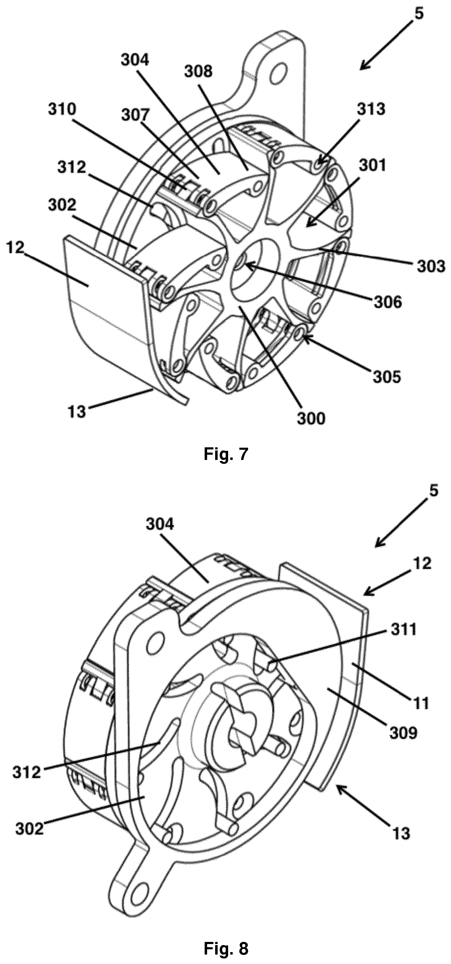

De préférence, les alvéoles 101, 201, 301 de la roue 100, 200, 300 de transfert comprennent au moins une paroi verticale 102, 202, 302, sensiblement plane, pleine et circulaire, et sont séparées les unes des autres par des cloisons 103, 203, 303 rigides, non élastiques, s'étendant sensiblement dans la direction radiale de la roue 100, 200, 300, des cloisons 103, 203, 303 qui peuvent être sensiblement droites (figure 4), inclinées (figure 6 et 7) ou concaves (figure 8).

La distance de calage des graines 2 est déterminée par la position des graines dans les alvéoles 101, 201, 301 de la roue alvéolaire 100, 200, 300, et en particulier leur position sur ou contre les cloisons 103, 203, 303 et/ou les parois 102, 202, 302.

Dans le mode de réalisation représenté à la figure 4, la cloison 103 capture la graine 2 depuis les moyens de distribution 3, et l'amène contre une première extrémité d'une lame 104, dont une seconde extrémité, opposée à la première, prend appui sur un élément pousseur 105, muni d'un ressort 107. Sous la force exercée par la graine 2, la lame 104 force le pousseur 105 à se relever par pivotement autour d'un axe qui est coaxial par rapport à celui de la roue 100, provoquant une traction sur le ressort 107. Puis, le pousseur 105 s'abaisse et chasse la graine 2 de la roue 100 dans les moyens de convoyage 4 par relâchement du ressort 107, qui est à nouveau comprimé par le pousseur 105 qui est relevé par la pression exercée par la graine 2 suivante sur la lame 104, et ainsi de suite.

Dans le mode de réalisation représenté à la figure 5, les alvéoles 201 de la roue 200 sont délimitées par des parois 203, mobiles durant la rotation de la roue 200, entre une position radiale, à savoir une position dans laquelle elles s'étendent dans la direction radiale de la roue 200, et une position circonférentielle, dans laquelle elles s'étendent dans la direction circonférentielle de la roue 200, et inversement. Les parois 203 sont mobiles chacune par rapport à un axe d'articulation 204 situé en périphérie de la roue 200 et parallèle à l'axe 206 de la roue 200, et sont mises en mouvement par l'action d'un ressort 205, disposé en partie basse de la roue 200. En passant de la position radiale, dans laquelle la graine 2 est reçue dans l'alvéole 201, à la position circonférentielle, par son pivotement la paroi 203 introduit la graine 2 dans les moyens de convoyage 4, le cycle du ressort 205 correspondant à la fréquence de transfert des graines 2.

De préférence, les parois 203 ont un profil, à savoir une section longitudinale, de forme bi-convexe, symétrique ou dissymétrique, ou plan-convexe.

Dans le mode de réalisation représenté aux figues 6 à 9, la roue 300 comprend des alvéoles 301, délimitées par des parois 303 radiales, de préférence concaves, et fermées par des cloisons mobiles 304, pivotantes autour d'un axe d'articulation 305 qui est parallèle à l'axe 306 de la roue alvéolaire 300, et qui est disposé de façon circonférentielle sur la paroi verticale 302.

Les cloisons mobiles 304 possèdent une extrémité proximale 307, qui est proche de leur axe d'articulation 305 et une extrémité distale 308, qui est opposée à l'extrémité proximale 307.

Les cloisons mobiles 304 peuvent passer d'une position dite « fermée », dans laquelle les cloisons mobiles 304 s'étendent longitudinalement le long de la périphérie de la paroi verticale 302 de la roue 300, les extrémités distales 308 se trouvant dans le prolongement des extrémités proximales 307 des alvéoles 301 adjacentes, fermant ainsi les alvéoles 301, à une position dite « ouverte », dans laquelle l'extrémité distale 308 de la cloison mobile 304 s'étend radialement vers l'axe de rotation 306 de la roue 300, ouvrant les alvéoles 301 dans leur partie supérieure, à la périphérie de la roue 300 (figure 7).

La cloison mobile 304 d'une alvéole 301 passe de la position fermée à la position ouverte afin de recevoir dans l'alvéole 301 la graine 2 individualisée provenant des moyens de distribution 3, par exemple du disque de distribution 7. Pour se faire, la cloison mobile 304 s'incline vers l'intérieur de l'alvéole 301 et donc vers l'axe 306 de la roue alvéolaire 300.

Lorsque la cloison mobile 304 passe de la position ouverte à la position fermée, son extrémité distale 308 remonte vers la périphérie de la roue 300 et agit comme un pousseur ou un éjecteur pour expulser la graine 2 en dehors de l'alvéole 301 vers les moyens de convoyage 4.

Ainsi, la distance de calage entre les graines 2, dépend de la distance entre chaque graine 2 disposée sur l'extrémité distale 308 de chaque cloison mobile 304 de chaque alvéole 301 de la roue alvéolaire 300.

Les cloisons mobiles 304 peuvent avoir toutes les formes adéquates. De préférence, elles adoptent une forme permettant de reconstituer une roue 300 fermée dont la surface périphérique est sensiblement continue lorsque les cloisons mobiles 304 sont en position fermée, en butée externe sur la périphérie de la roue 300.

De préférence, les cloisons mobiles 304 peuvent avoir un profil, à savoir une section longitudinale, sensiblement linéaire pour former une sécante avec la paroi circulaire verticale 302 ou une section longitudinale en forme d'arc de cercle, de préférence identique ou proche de l'arc de circonférence de la paroi verticale 302, et donc de la roue 300, les cloisons mobiles 304 pouvant alors avoir un profil bi-convexe symétrique ou dissymétrique ou plan-convexe.

De préférence, chaque cloison mobile 304 est actionnée par une came 309 qui la fait passer de la position ouverte, pour permettre le chargement de la graine 2, contre la force d'un ressort 310 qui, par relâchement, la referme et l'isole de l'extérieur.

De préférence, la came 309 ouvre l'alvéole 301 en agissant sur une extrémité d'un poussoir 311 traversant une rainure 312 débouchante et s'étendant dans la paroi verticale 302 sensiblement dans la direction radiale de la roue 300, l'autre extrémité du poussoir 311 engageant une ouverture 313 pratiquée dans l'extrémité distale 308 de la cloison mobile 304. La forme de la came 309 détermine l'amplitude de l'ouverture de l'alvéole 301 (figure 8).

Le passage des cloisons mobiles 304 entre leur position ouverte et leur position fermée se fait pendant la rotation de la roue 300, et du disque de distribution 7 si ce dernier est présent.

Quelque soit le type de roue 100, 200, 300, considéré, et pour éviter que la graine 2 ne soit éjectée de la roue 100, 200, 300 avant d'atteindre les moyens de convoyage 4, il est préférable de prévoir un guide de maintien 11 permettant de maintenir captif la graine 2 dans chaque alvéole 101, 201, 301 pendant la rotation de la roue 100, 200, 300, et donc durant son transfert vers le moyens de convoyage 4, et de la guider vers les moyens de convoyage 4.

Le guide 11 est disposé sensiblement tangentiellement à la roue 100, 200, 300 et prend, de préférence, une forme d'arc de cercle, avantageusement compatible ou identique avec l'arc de circonférence de la paroi verticale 102, 202, 302, et donc de la roue 100, 200, 300. Le guide 11 comprend une extrémité supérieure 12 au niveau de laquelle les alvéoles 101, 201, 301 reçoivent la graine 2 individualisée, et une extrémité inférieure 13 qui constitue le point d'éjection de la graine 2 individualisée vers les moyens de convoyage 4. Lors de l'arrivée de la graine 2 à cette extrémité inférieure 13, elle est sollicitée selon trois directions, une composante radiale par rapport à la roue alvéolaire 100, 200, 300, produite par la pression des parois 103, 203, 304 et de la cloison mobile 304 sur la graine 2, une réaction produite par le guide 11, qui induit également une friction sur la graine 2, et une composante tangentielle donnée par la rotation de la roue alvéolaire 100, 200, 300.

De préférence, et quelques soient les moyens de transfert et de calage 5, ces derniers comprennent, ou coopèrent, avec des moyens de maintien de l'individualisation des graines 2 durant leur réception depuis les moyens de distribution 3. En permettant de repousser les éventuels doubles de graines 2 ou replacer les graines 2 décalées par rapport aux alvéoles 9 du disque de distribution 7, ces moyens présentent l'avantage d'éviter un bourrage ou un coincement de plusieurs graines 2 à l'entrée des moyens de transfert et de calage 5.

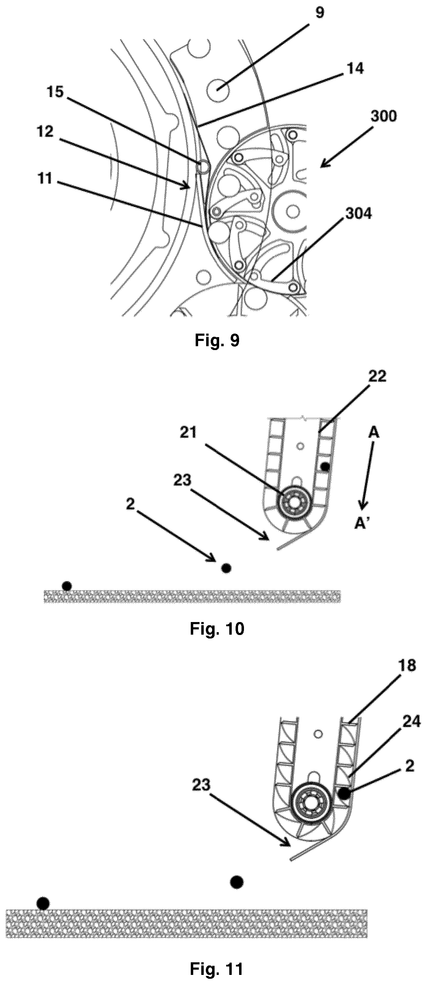

De préférence, comme représenté à la figure 9 pour une roue 300 comprenant des cloisons mobiles 304, les moyens de maintien de l'individualisation des graines 2 sont, ou comprennent, une membrane souple 14, qui est disposée sensiblement tangentiellement à la roue 300. De préférence, cette membrane 14 est maintenue en position par un élément absorbeur 15, absorbant les déformations de la membrane souple 14, et jouant ainsi un rôle de ressort et de maintien de la membrane 14 dans sa position et sa forme. De préférence, l'élément absorbeur 15 est disposé au bord de l'extrémité 12 supérieure du guide 11.

De préférence, la roue alvéolaire 100, 200, 300 est synchronisée en position, mais également en vitesse, aux moyens de convoyage 4, afin que le point d'éjection de la graine 2 de la roue 100, 200, 300 corresponde au point de chargement de la graine 2 dans les moyens de convoyage 4, ce qui permet un bon transfert des graines 2 au moyens de convoyage 4. Un déchargement rapide et précis permet de garantir un bon placement des graines 2 dans le sillon.

La vitesse de rotation de la roue 100, 200, 300 est d'autant plus importante que son nombre d'alvéoles 101, 201, 301 est inférieur aux nombres d'alvéoles 9 du disque de distribution 7 et à la distance entre graines 2 souhaitée pour le semis. Toutefois, elle varie également en fonction des paramètres de l'ensemble de distribution 1, de semis et de la vitesse de travail, et confère à la graine 2, en sortie des moyens de convoyage 4, une vitesse tangentielle variable et relativement élevée (figure 16). Les moyens de convoyage 4 fonctionnant de préférence à une vitesse supérieure ou égale à la vitesse de travail de l'élément semoir 16.

Par exemple, pour un semis de maïs ayant une distance inter-graines au sol de 14 cm, avec un disque de distribution 7 ayant trente-deux alvéoles et une roue alvéolaire 100, 200, 300 de huit alvéoles 101, 201, 301, la vitesse de la roue 100, 200, 300 sera d'environ 120 tours par minutes pour une vitesse d'avancement de l'ensemble de distribution 1 de 8 km/h.

De préférence, la vitesse et la synchronisation des vitesses de la roue alvéolaire 100, 200, 300 et des différents moyens, est modifiable afin de maintenir la distance de calage, ce qui présente l'avantage de pouvoir obtenir un ensemble de distribution 1 qui puisse s'adapter aux distances inter-graines souhaitées ou au changement de population de graines 2.

Les moyens de convoyage 4 sont tous moyens aptes à accompagner des graines 2 individualisés jusqu'au sol, tout en permettant de respecter une distance déterminée entre chaque graine 2, et de préférence donnant aux graines 2 une vitesse horizontale n'induisant pas de phénomène de rétro-roulage, une vitesse adaptée, égale ou supérieure, à la vitesse de l'élément semeur 16 portant l'ensemble de distribution 1 selon l'invention.

De préférence, ces moyens de convoyage 4 comprennent un convoyeur à palettes 17 dans lequel certaines ou toutes les palettes 18 reçoivent une graine 2, de façon à ce que les graines 2 soient séparées par une distance qui correspond à la distance de calage déterminée par les moyens de transfert 5.

De préférence, le convoyeur à palettes 17 comprend au moins une paroi 19 dont une extrémité supérieure est disposée tangentiellement à, et à proximité, des moyens de transfert 5. La paroi 19 s'étend depuis les moyens de transfert 5 jusqu'à proximité du sol.

De préférence, cette paroi 19 fait partie d'un boitier, qui peut adopter toutes les formes et dimensions adéquates. Le boitier comprend une première ouverture supérieure, disposée à proximité des moyens de transfert et de calage 5 et une seconde ouverture disposée à proximité du sol ou du fond du sillon et permettant à chaque graine d'y être déposée.

De préférence, le convoyeur à palettes 17 comprend au moins une paire de poulies 20, 21 supportant une courroie 22 mobile et convoyant les graines 2 du haut du convoyeur à palettes 17 vers le bas, dans le sens A-A', tel que représenté à la figure 10. Une des poulies 20, 21 peut être motrice, elle est alors couplée à des moyens d'entrainement, alors que l'autre peut être une poulie en roue libre.

De préférence, la poulie supérieure 20 possède un diamètre supérieur à celle de la poulie inférieure 21.

Dans le mode de réalisation dans lequel les moyens de transfert comprennent une roue alvéolaire 100, 200, 300, la courroie 22 comprenant les palettes 17, et donc la poulie 20, 21 qui est motrice tourne dans le sens opposé du sens de rotation de la roue alvéolaire 100, 200, 300.

De préférence, comme représenté aux figures 1 à 3, le convoyeur à palettes 17 a une forme sensiblement longitudinale. Il est disposé verticalement ou de façon oblique, entre les moyens de transfert et de calage 5 et le sol ou le fond du sillon.

Dans le mode de réalisation dans lequel le convoyeur à palettes 17 comprend un boitier, la première ouverture se situe en partie supérieure du boitier, de préférence en son sommet, alors que la seconde ouverture se situe à son extrémité inférieure. La poulie supérieure 20 est disposée en partie supérieure du boitier, à proximité de l'ouverture supérieure du boitier et la poulie inférieure 21 est disposée à proximité de l'ouverture inférieure du boitier.

La courroie 22 comprend au moins une première face, éventuellement crantée, en contact avec la ou les poulies 20, 21 d'entrainement, éventuellement également crantées, et une seconde face, opposée à la première et comprenant les palettes 18 faisant saillie depuis cette face, formant une suite de logements de réception des graines 2 qui sont délimités, en haut et en bas, par des palettes 18 consécutives et d'un coté par la face de la courroie 22 d'où s'étendent les palettes 18 et de l'autre coté par la paroi 19, sauf dans la zone de jonction avec les moyens de transfert et de calage 5 ou la paroi 19 ne doit pas empêcher la graine 2 de pénétrer dans un logement.

Dans les modes de réalisation comprenant une roue alvéolaire 200, 300 comprenant respectivement une paroi 203 mobile ou une cloison 304 mobile, la roue alvéolaire 200, 300 est disposée tangentiellement au convoyeur à palettes 17, en particulier à la première ouverture disposée au sommet du boitier du convoyeur à palettes 17, et le logement, ayant reçu la graine 2 à convoyer au sol, est fermé par la paroi 203 mobile ou la cloison mobile 304 ayant poussé la graine 2 dans le logement. Ainsi, au niveau supérieur du convoyeur à palettes 17, la graine 2 ne peut s'échapper du convoyeur 17.

Dans la partie inférieure du convoyeur 17, au niveau de la seconde ouverture du boitier, le logement convoyant la graine 2 se retrouve ouvert, permettant ainsi sa libération au sol (figures 10 à 16).

De préférence, les moyens de convoyage 4 comprennent en outre des moyens de guidage 23 de la sortie des graines 2. De préférence, un guide, ou une rampe inclinée, disposé(e) au niveau de la seconde ouverture du boitier du convoyeur à palettes.

L'élément de distribution 1 se déplaçant par rapport au sol à une vitesse donnée, dite vitesse de travail (Vt), la courroie 22 du convoyeur 17 est entrainée à une vitesse telle que la composante horizontale (Vh) de la vitesse de sortie de la graine 2 (Vsg) soit égale, de préférence supérieure, à la vitesse de travail, ce qui permet de réduire, voir d'annuler, le phénomène de rétro-roulage de la graine 2 au sol (figure 16).

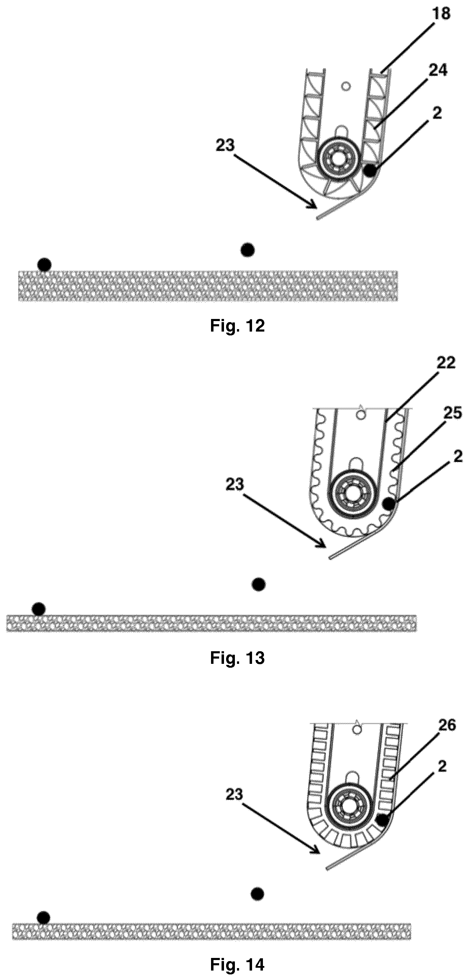

Dans un mode de réalisation possible des moyens de convoyage 4, une paroi 24 lie le pied d'une palette 18 au sommet de la palette 18 consécutive inférieure (figures 11 et 12). De préférence, cette paroi 24 est souple et déformable, est possède une longueur supérieure à la distance entre les deux palettes 18 consécutives, lui donnant une forme concave.

Cela permet à la paroi 24 d'exercer une légère pression sur la graine 2 vers la paroi 19 et de la repousser vers le haut pour la mettre en contact avec la palette 18 supérieure, afin de la maintenir fermement, et donc de la stabiliser, dans le logement dans lequel elle se trouve. De plus, cela permet à la courroie 22 de s'enrouler autour de la poulie 21 inférieure sans que la paroi 22 ne se mette en traction et provoque une déformation ou un fléchissement des palettes 26 auxquelles elle est liée.

Ainsi, en fonction de la concavité et des propriétés de souplesse ou de déformabilité de la paroi 22, il est possible de s'adapter à divers formes et tailles de graines 2. De plus, cela permet de modifier la taille des logements du convoyeur à palette 17 sans pénaliser les vitesses de sortie de graine 2.

Dans un mode de réalisation possible des moyens de convoyage 4, la courroie 22 comprend des crans 25 sur sa seconde face, formant une courroie 22 crantée (figure 13). De préférence, ces crans 25 ont une forme et des dimensions compatibles avec celles des graines 2. Avantageusement, les crans 25 sont arrondis et permettent de stabiliser les graines contre la paroi 19.

Dans un mode de réalisation possible des moyens de convoyage 4, la courroie 22 comprend des poils 26 s'étendant en faisant saillie depuis sa seconde face, pour former une brosse discontinue, la distance entre deux poils, ou série de poils consécutifs, formant les logements de réception des graines 2, et choisis de telle sorte que la graine 2 y soit serrée (figure 12). Cela présente l'avantage de mieux stabiliser la graine 2 dans les moyens de convoyage 4. De plus, cela permet d'affiner la façon dont les graines 2 sont prises en charge en adaptant la longueur, la souplesse et la densité d'implantation des poils 26 pour former des zones plus ou moins rigides, profondes, des zones privilégiant ou non la prise des graines 2 dans les moyens de convoyage 4. Ce mode de réalisation favorise une division du cloisonnement et procure une solution de convoyage moins, ou pas, sensible aux problèmes de synchronisation en position avec les moyens de transfert 5.

Dans un mode de réalisation possible des moyens de convoyage 4, la courroie 22 comprend, ou est, une brosse 27 continue, comprenant des poils s'étendant depuis, en faisant saillie, de la seconde face de la courroie 22, la densité et la longueur des poils constituant la brosse étant de préférence constantes le long de la courroie 22. Cela présente l'avantage d'améliorer la stabilité de la graine 2 dans les moyens de convoyage 4 et d'être moins, ou pas, sensible aux problèmes de synchronisation en position avec les moyens de transfert 5.

Dans un mode de réalisation possible de l'ensemble de distribution 1, les moyens de transfert et de calage 5 prennent la forme et reproduisent le fonctionnement des moyens de convoyage 4 tels que décrits précédemment, des moyens qui sont synchronisés en position et vitesse par rapport aux moyens de distribution 3, par exemple au disque de distribution 7. De préférence, il s'agit d'un convoyeur à palettes 28, dont les palettes forment des logements recevant les graines 2 de façon individualisée depuis les alvéoles 9 du disque de distribution 7. Ce convoyeur à palettes 28 est disposé sensiblement verticalement et une partie supérieure tangentiellement par rapport au disque de distribution 7. Il est mis en mouvement par au moins deux poulies, dont au moins une est motrice, pour un convoyage des graines de bas en haut. Arrivée en bas du convoyeur à palettes 28, chaque graine 2 est ensuite accélérée et dirigée sensiblement de façon oblique ou horizontale par rapport au sol, de manière à ce que leur vitesse horizontale soit équivalente ou supérieure à la vitesse de déplacement de l'élément semeur 16 comprenant un tel ensemble de distribution 1. De préférence, ce changement de direction et cette accélération sont obtenus par un transporteur à bande 29 comprenant une courroie lisse ou crantée, et une roue d'accélération 30 en contact avec une portion de la courroie afin de pincer chaque graine 2 contre la courroie (figure 17).

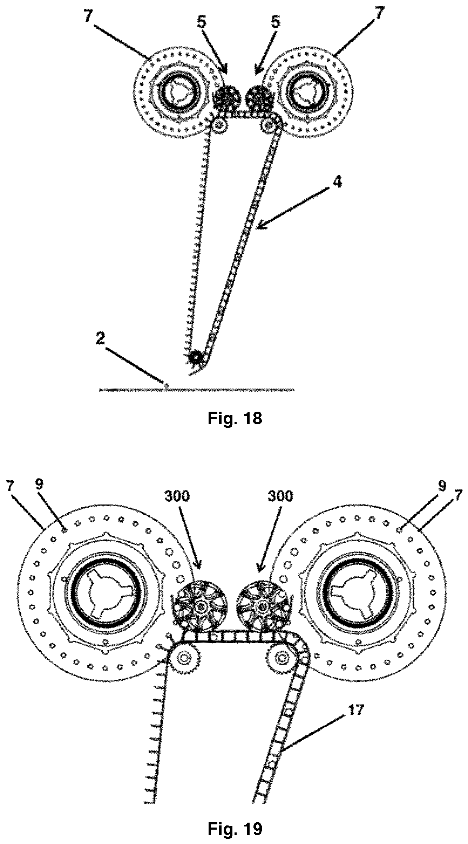

De préférence, l'ensemble de distribution 1 peut comprendre une pluralité de moyens de distribution 3, avantageusement deux disques distributeurs 7, disposés verticalement l'un en face de l'autre et tournant dans des sens opposés, chacun coopérant avec des moyens de transfert et de calage 5, avantageusement chacun coopérant avec une roue alvéolaire 100, 200, 300 ou un convoyeur à palettes 28, et partageant les même moyens de convoyage 4, avantageusement le même convoyeur à palettes 17 (figures 18, 19).

L'élément semeur 16 selon l'invention comprend un ou plusieurs ensembles de distribution 1 selon l'invention.

De préférence, l'élément semeur 16 comprend un châssis 31 portant un ou plusieurs ensembles de distribution 1 selon l'invention et des moyens d'attache 32 à un semoir, éventuellement également un ou plusieurs réservoirs d'alimentation en graines 2 et/ou des moyens d'ouverture 33 d'un ou plusieurs sillons dans le sol, des moyens 34 refermant le ou les sillons une fois les graines 2 déposées.

Le semoir selon l'invention comprend un ou plusieurs éléments semeurs 16.

Les éléments semeurs 16 d'un même semoir, mettant en œuvre les moyens de transfert et de calage 5 selon l'invention, peuvent être synchronisés entre eux. Cela présente l'avantage de placer les graines 2 d'un rang précisément par rapport au rang voisin, permettant ainsi une disposition précise des graines 2 ou leur alignement perpendiculairement au sens du semis, ce qui permet l'identification des emplacements de chacune des graines 2, obtenus par les informations de calage et de synchronisation, autorisant ainsi la réalisation d'une cartographie du semis effectué.

La méthode de distribution selon l'invention d'un produit granulaire jusqu'au sol comprend l'étape de prendre un produit granulaire sous forme individualisé à l'aide de moyens de distribution 3, de le décharger dans des moyens de transfert 5, de façon synchronisée en vitesse et en position, et de caler, à savoir fixer, la distance entres les produits granulaires individualisés successifs à l'aide des moyens de transfert 5, durant le transfert des produits granulaires individualisés vers des moyens de convoyage 4, puis de convoyer, jusqu'au sol, les produits granulaires individualisés successifs, à l'aide de moyens de convoyage 4, tout en maintenant constante, jusqu'au sol, ladite distance entres lesdits produits granulaires individualisés successifs.

De préférence, le transfert des produits granulaires individualisés vers des moyens de convoyage 4 se fait en capturant de façon individualisée les produits granulaires, en les maintenant captifs, puis en les introduisant de façon individualisée, dans les moyens de convoyage.

## Revendications

1. Ensemble de distribution (1) de produits granulaires à distribuer au sol comprenant des moyens de distribution (3) desdits produits granulaires sous une forme individualisée, des moyens de convoyage (4) au sol desdits produits granulaires individualisés, des moyens de transfert (5) desdits produits granulaires individualisés des moyens de distribution (3) aux moyens de convoyage (4), dans lequel lesdits moyens de transfert (5) sont synchronisés en vitesse et en position avec lesdits moyens de distribution (3) et lesdits moyens de transfert (5) capturent de façon individualisée lesdits produits granulaires et les immobilisent au sein desdits moyens de transfert (5), de façon à maintenir chaque produit granulaire espacé d'une distance déterminée et constante les uns par rapport aux autres, dans lesdits moyens de transfert (5) et durant le transfert desdits produits granulaires aux moyens de convoyage (4) et dans lequel les moyens de transfert (5) comprennent une ou plusieurs roues alvéolaires (200, 300), mobiles en rotation chacune autour d'un axe (206, 306), et comprenant des alvéoles (201, 301) aptes à recevoir un produit granulaire à la fois,
**caractérisée en ce que** la ou les roues alvéolaires (200) comprend des parois (203) mobiles entre une position radiale et une position circonférentielle, selon un axe d'articulation (204) situé en périphérie de ladite ou lesdites roues (200) et parallèle à l'axe (206) de ladite ou lesdites roue (200)
ou **en ce que** la ou les roues alvéolaires (300) comprennent des parois (303) radiales fixes et des cloisons mobiles (304) comprenant une extrémité proximale (307), proche de leur axe d'articulation (305) et une extrémité distale (308), opposée à ladite extrémité proximale (307), ledit axe d'articulation (305) étant parallèle à l'axe (306) de ladite ou lesdites roues alvéolaires (300) et étant disposé en périphérie de ladite ou lesdites roues alvéolaires (300), lesdites cloisons mobiles (304) passant d'une position dite « fermée », dans laquelle ladite extrémité distale (308) se trouve dans le prolongement de l'extrémité proximale (307) d'une alvéole adjacente (301), à une position dite « ouverte », dans laquelle l'extrémité distale (308) s'étend radialement vers ledit axe (306) de rotation de ladite ou desdites roues alvéolaires (300).

2. L'ensemble de distribution (1) selon la revendication 1, dans lequel les moyens de convoyage (4) maintiennent constante, jusqu'au sol, la distance entre chaque produit granulaire individualisé, qui a été fixée par les moyens de transfert (5).

3. L'ensemble de distribution (1) selon l'une quelconque des revendications précédentes, dans lequel les moyens de transfert (5) sont synchronisés en position avec les moyens de convoyage (4).

4. L'ensemble de distribution (1) selon l'une quelconque des revendications précédentes, dans lequel la distance entre chaque produit granulaire individualisé dans les moyens de transfert (5), est ajustable.

5. L'ensemble de distribution (1) selon la revendication 1, dans lequel les cloisons mobiles (304) passent de la position « fermée » à la position « ouverte » par l'action d'une came (309) contre la force d'un ressort (310), et de la position « ouverte » à la position « fermée » par le relâchement dudit ressort (310).

6. L'ensemble de distribution (1) selon l'une quelconque des revendications précédentes, dans lequel les moyens de distribution (3) des produits granulaires sous forme individualisée comprennent un ou plusieurs disques distributeurs (7), mobiles en rotation, et comprenant deux faces, dont au moins une première face (8) comprend, disposées sur sa périphérie, des alvéoles (9) aptes à recevoir lesdits produits granulaires de façon individualisée.

7. L'ensemble de distribution (1) selon l'une quelconque des revendications précédentes, dans lequel les moyens de convoyage (4) sont ou comprennent un convoyeur à palettes (17).

8. Elément semeur (16) comprenant un ou plusieurs ensembles de distribution (1) de produits granulaires au sol selon l'une quelconque des revendications précédentes.

9. Semoir comprenant un ou plusieurs éléments semeurs (16) selon la revendication 8.

## Patentansprüche

1. Anordnung zur Ausgabe (1) von auf dem Boden zu verteilenden granulatförmigen Produkten, welche Mittel zur Ausgabe (3) der granulatförmigen Produkte in einer vereinzelten Form, Mittel zur Förderung (4) der vereinzelten granulatförmigen Produkte zum Boden und Mittel zur Übergabe (5) der vereinzelten granulatförmigen Produkte von den Ausgabemitteln (3) an die Fördermittel (4) umfasst, wobei die Übergabemittel (5) hinsichtlich der Geschwindigkeit und der Position mit den Ausgabemitteln (3) synchronisiert sind und die Übergabemittel (5) die granulatförmigen Produkte auf vereinzelte Weise erfassen und sie im Inneren der Übergabemittel (5) zu fixieren, um alle granulatförmige Produkte in den Übergabemitteln (5) und während der Übergabe der granulatförmigen Produkte an die Fördermittel (4) um einen bestimmten und konstanten Abstand voneinander beabstandet zu halten, und wobei die Übergabemittel (5) ein oder mehrere Zellenräder (200, 300) umfassen, die jeweils um eine Achse (206, 306) drehbeweglich sind und Zellen (201, 301) umfassen, die geeignet sind, jeweils ein granulatförmiges Produkt aufzunehmen,
**dadurch gekennzeichnet, dass** das Zellenrad oder die Zellenräder (200) Wände (203) umfasst bzw. umfassen, die um einen Gelenkbolzen (204), der sich am Umfang des Rades oder der Räder (200) befindet und zur Achse (206) des Rades oder der Räder (200) parallel ist, zwischen einer radialen Position und einer Umfangsposition beweglich sind,
oder dadurch, dass das Zellenrad oder die Zellenräder (300) ortsfeste radiale Wände (303) umfasst bzw. umfassen, sowie bewegliche Trennwände (304), die ein proximales Ende (307) in der Nähe ihres Gelenkbolzens (305) und ein dem proximalen Ende (307) gegenüberliegendes distales Ende (308) umfassen, wobei der Gelenkbolzen (305) parallel zur Achse (306) des Zellenrades oder der Zellenräder (300) ist und am Umfang des Zellenrades oder der Zellenräder (300) angeordnet ist, wobei sich die beweglichen Trennwände (304) aus einer sogenannten "geschlossenen" Position, in der sich das distale Ende (308) in der Verlängerung des proximalen Endes (307) einer benachbarten Zelle (301) befindet, in eine sogenannte "geöffnete" Position bewegen, in der sich das distale Ende (308) radial in Richtung der Drehachse (306) des Zellenrades oder der Zellenräder (300) erstreckt.

2. Anordnung zur Ausgabe (1) nach Anspruch 1, wobei die Fördermittel (4) die Entfernung den Abstand zwischen den einzelnen vereinzelten granulatförmigen Produkten, der von den Übergabemitteln (5) festgelegt worden ist, bis zum Boden konstant halten.

3. Anordnung zur Ausgabe (1) nach einem der vorhergehenden Ansprüche, wobei die Übergabemittel (5) hinsichtlich der Position mit den Fördermitteln (4) synchronisiert sind.

4. Anordnung zur Ausgabe (1) nach einem der vorhergehenden Ansprüche, wobei der Abstand zwischen den einzelnen vereinzelten granulatförmigen Produkten in den Übergabemitteln (5) verstellbar ist.

5. Anordnung zur Ausgabe (1) nach Anspruch 1, wobei sich die beweglichen Trennwände (304) aus der "geschlossenen" Position in die "geöffnete" Position durch die Einwirkung eines Nockens (309) entgegen der Kraft einer Feder (310) bewegen, und aus der "geöffneten" Position in die "geschlossene" Position durch das Entspannen der Feder (310).

6. Anordnung zur Ausgabe (1) nach einem der vorhergehenden Ansprüche, wobei die Mittel zur Ausgabe (3) der granulatförmigen Produkte in vereinzelter Form eine oder mehrere Verteilerscheiben (7) umfassen, die drehbeweglich sind und zwei Seiten umfassen, von denen wenigstens eine erste Seite (8) Zellen (9) umfasst, die auf ihrem Umfang angeordnet sind und geeignet sind, die granulatförmigen Produkte auf vereinzelte Weise aufzunehmen.

7. Anordnung zur Ausgabe (1) nach einem der vorhergehenden Ansprüche, wobei die Fördermittel (4) ein Palettenförderer (17) sind oder einen solchen umfassen.

8. Säelement (16), welches eine oder mehrere Anordnungen zur Ausgabe (1) von granulatförmigen Produkten auf den Boden nach einem der vorhergehenden Ansprüche umfasst.

9. Sämaschine, welche ein oder mehrere Säelemente (16) nach Anspruch 8 umfasst.

## Claims

1. Distribution assembly (1) for distributing granular products that are to be distributed on the ground comprising distribution means (3) for distributing said granular products singly, conveying means (4) for conveying said singled granular products to the ground, transfer means (5) for transferring said singled granular products from the distribution means (3) to the conveying means (4), wherein said transfer means (5) are synchronized in terms of speed and in terms of position with said distribution means (3) and said transfer means (5) capture said granular products singly and immobilize them within said transfer means (5), so as to keep each granular product spaced a determined and constant distance from one another, in said transfer means (5) and during the transfer of said granular products to the conveying means (4), and wherein the transfer means (5) comprise one or more singling wheels (200, 300) each able to rotate about an axis (206, 306) and comprising pockets (201, 301) able to receive one granular product at a time,
**characterized in that** the singling wheel or wheels (200) comprise walls (203) able to move between a radial position and a circumferential position, about an axis of articulation (204) situated at the periphery of said wheel or wheels (200) and parallel to the axis (206) of said wheel or wheels (200)
or **in that** the singling wheel or wheels (300) comprise fixed radial walls (303) and mobile partitions (304) comprising a proximal end (307) close to their axis of articulation (305) and a distal end (308), the opposite end to said proximal end (307), said axis of articulation (305) being parallel to the axis (306) of said singling wheel or wheels (300) and being positioned at the periphery of said singling wheel or wheels (300), said mobile partitions (304) moving from a position referred to as "closed", in which said distal end (308) is in the continuation of the proximal end (307) of an adjacent pocket (301), to a position referred to as "open", in which the distal end (308) extends radially toward said axis (306) of rotation of said singling wheel or wheels (300).

2. Distribution assembly (1) according to Claim 1, wherein the conveying means (4) keep the distance between each singled granular product, which distance has been fixed by the transfer means (5), constant until they reach the ground.

3. Distribution assembly (1) as claimed in either one of the preceding claims, wherein the transfer means (5) are synchronized in terms of position with the conveying means (4).

4. Distribution assembly (1) according to any one of the preceding claims, wherein the distance between each singled granular product in the transfer means (5) is adjustable.

5. Distribution assembly (1) according to Claim 1, wherein the mobile partitions (304) move from the "closed" position to the "open" position via the action of a cam (309) working against the force of a spring (310), and from the "open" position to the "closed" position via the relaxation of said spring (310).

6. Distribution assembly (1) according to any one of the preceding claims, wherein the distribution means (3) for distributing the granular products singly comprise one or more distributor discs (7), able to rotate, and comprising two faces, of which at least a first face (8) comprises, arranged on its periphery, pockets (9) able to receive said granular products singly.

7. Distribution assembly (1) according to any one of the preceding claims, wherein the conveying means (4) are or comprise a cleated conveyor (17).

8. Seeding element (16) comprising one or more distribution assemblies (1) for distributing granular products on the ground according to any one of the preceding claims.

9. Seeder comprising one or more seeding elements (16) according to Claim 8.
